# EUROPÄISCHE PATENTSCHRIFT

(11) **EP 3 869 954 B1**
(45) Veröffentlichungstag und Bekanntmachung des Hinweises auf die Patenterteilung: **21.09.2022**
(21) Anmeldenummer: 19794448.1
(22) Anmeldetag: 18.10.2019
(51) Int. Cl.: A01M 7/00

(54) **LANDWIRTSCHAFTLICHE SPRITZEINRICHTUNG**
AGRICULTURAL SPRAYING EQUIPMENT
DISPOSITIF AGRICOLE DE PULVÉRISATION

(30) Priorität: 25.10.2018 DE 102018126587
(43) Veröffentlichungstag der Anmeldung: 01.09.2021
(73) Patentinhaber: Amazonen-Werke H. Dreyer SE & Co. KG, 49205 Hasbergen (DE)
(72) Erfinder: KLEMANN, Timo, 49191 Belm (DE); KIEFER, Stefan, 49074 Osnabrück (DE)
(86) Internationale Anmeldenummer: PCT/EP2019/078358
(87) Internationale Veröffentlichungsnummer: WO 2020/083771

(56) Entgegenhaltungen:
- EP-A2- 2 567 617
- EP-A2- 2 570 027
- WO-A1-01/60525
- DE-A1-102006 038 688
- US-A- 4 613 080

## Beschreibung

Die Erfindung betrifft eine landwirtschaftliche Spritzeinrichtung nach dem Oberbegriff des Patentanspruchs 1 und ein Verfahren zum Ausbringen von Flüssigkeit auf eine landwirtschaftliche Nutzfläche nach dem Oberbegriff des Patentanspruchs 10, und wie jeweils bekannt aus EP 2 570 027 A2.

Beim Ausbringen von Flüssigkeit auf eine landwirtschaftliche Nutzfläche werden landwirtschaftliche Spritzeinrichtungen eingesetzt, an deren Spritzgestänge eine Mehrzahl von Ausbringeinheiten angeordnet ist. Die Ausbringeinheiten können beispielsweise als Spritzdüsen ausgebildet sein und sind üblicherweise äquidistant voneinander beabstandet angeordnet.

Abhängig von dem geplanten Ausbringvorgang und den auf der landwirtschaftlichen Nutzfläche heranwachsenden Kulturen können unterschiedliche Spritzkonfigurationen vorteilhaft sein. Bei einigen Flüssigkeiten kann dabei eine flächige Ausbringung über die gesamte landwirtschaftliche Nutzfläche vorteilhaft sein. Andere Flüssigkeiten sind jedoch reihenbezogen direkt auf die landwirtschaftlichen Nutzpflanzen auszubringen, sodass hier eine Flächenspritzung zu vermeiden ist. Bei wiederum anderen Flüssigkeiten ist der Kontakt mit den landwirtschaftlichen Nutzpflanzen möglichst zu vermeiden, sodass eine Ausbringung innerhalb von Zwischenbereichen, welche sich beispielsweise zwischen benachbarten Pflanzenreihen erstrecken, bevorzugt ist.

Mit bekannten landwirtschaftlichen Spritzeinrichtungen sind bereits unterschiedliche Ausbringvarianten realisierbar, jedoch erfordert dies bisher einen erheblichen Umbauaufwand an der landwirtschaftlichen Spritzeinrichtung. Beispielsweise sind die Ausbringeinheiten vor der Ausbringung der Flüssigkeit auf die landwirtschaftliche Nutzfläche manuell zu positionieren und an den geeigneten Positionen manuell zu fixieren. Aufgrund des hohen Zeitaufwands, welcher für entsprechende Umbauarbeiten aufzuwenden ist, verfügen derartige Systeme lediglich über eine geringe Marktakzeptanz.

Die der Erfindung zugrundeliegende Aufgabe besteht somit darin, die Flexibilität bei der Ausbringung von Flüssigkeit auf landwirtschaftliche Nutzflächen zu erhöhen, ohne dass dies aufwendige Umbauarbeiten an der eingesetzten Spritzeinrichtung erfordert.

Die Aufgabe wird gelöst durch eine landwirtschaftliche Spritzeinrichtung der eingangs genannten Art, wobei jeweils ein Flüssigkeitsauslass der Verteilergehäuse mehrerer Ausbringeinheiten über eine Zusatzleitung mit jeweils einer Zusatzausbringeinheit verbunden ist.

Die Erfindung macht sich die Erkenntnis zunutze, dass neben den an dem Spritzgestänge angeordneten Hauptausbringeinheiten zusätzlich mehrere Zusatzausbringeinheiten vorgesehen werden können, über welche dann zusätzliche Ausbringmethoden umsetzbar sind. Beispielsweise können die Hauptausbringeinheiten für eine flächige Ausbringung der Flüssigkeit über die gesamte landwirtschaftliche Nutzfläche eingesetzt werden, wobei die Zusatzausbringeinheiten zum reihenbezogenen Ausbringen der Flüssigkeit auf die landwirtschaftliche Nutzfläche Verwendung finden können. Die Zusatzausbringeinheiten werden dabei erfindungsgemäß über die Hauptausbringeinheiten gespeist, sodass kein separates Zuführsystem für die Zusatzausbringeinheiten notwendig ist. Vielmehr können die Zusatzausbringeinheiten über eine Freigabe der entsprechenden Flüssigkeitsauslässe der Hauptausbringeinheiten aktiviert und über eine Sperrung der jeweiligen Flüssigkeitsauslässe der Hauptausbringeinheiten deaktiviert werden.

Die Hauptausbringeinheiten sind vorzugsweise als Mehrfachdüsenkörper ausgebildet. Insbesondere ist ein oder sind mehrere Flüssigkeitsauslässe der Verteilergehäuse der jeweiligen Hauptausbringeinheiten mit einem Düsenaufsatz gekoppelt. Somit lassen sich die Hauptausbringeinheiten einerseits zum Ausbringen von Flüssigkeit und andererseits zum Speisen der Zusatzausbringeinheiten verwenden. Dabei kann die Speisung der Zusatzausbringeinheiten über die Hauptausbringeinheiten alternativ oder zusätzlich zu der direkten Flüssigkeitsausbringung durch die Hauptausbringeinheiten erfolgen.

Die jeweiligen Zusatzleitungen, welche jeweils einen Flüssigkeitsauslass eines Verteilergehäuses einer Hauptausbringeinheit mit einer Zusatzausbringeinheit verbinden, sind als flexible Leitungen, insbesondere als Schläuche ausgebildet. Die Zusatzausbringeinheiten sind vorzugsweise als Spritzdüsen ausgebildet. Zusätzlich sind die Zusatzausbringeinheiten entlang des Spritzgestänges quer zur Fahrtrichtung bewegbar.

In einer bevorzugten Ausführungsform der erfindungsgemäßen landwirtschaftlichen Spritzeinrichtung sind die Hauptausbringeinheiten ortsfest an dem Spritzgestänge befestigt. Die Hauptausbringeinheiten weisen vorzugsweise einen festen und nicht veränderlichen Abstand zueinander auf.

Die Zusatzausbringeinheiten sind quer zur Fahrtrichtung verschiebbar, sodass der Abstand zwischen den Zusatzausbringeinheiten untereinander und der Abstand zwischen den Hauptausbringeinheiten und den Zusatzausbringeinheiten veränderbar ist. Aufgrund der Flexibilität der Zusatzleitungen, über welche die Zusatzausbringeinheiten gespeist werden, erfordert das Verschieben der Zusatzausbringeinheiten quer zur Fahrtrichtung keinerlei Anpassungen der Flüssigkeitszuführung. Es ergibt sich also ein frei justierbarer Abstand der Zusatzausbringeinheiten untereinander. Somit eignet sich die landwirtschaftliche Spritzeinrichtung sowohl für die Flächenspritzung als auch für die Ausbringung mit Reihenbezug. Beispielsweise kann zunächst eine Flächenspritzung ausgeführt werden, bei welcher die Hauptausbringeinheiten einen Abstand von etwa 50 cm zueinander aufweisen. Nachfolgend kann dann mit der gleichen landwirtschaftlichen Spritzeinrichtung ohne aufwendige Umbauarbeiten eine reihenbezogene Ausbringung der Spritzflüssigkeit ausgeführt werden. Die reihenbezogene Ausbringung der Spritzflüssigkeit kann dabei derart erfolgen, dass die Flüssigkeit mittels der Zusatzausbringeinheiten gezielt auf Pflanzenreihen auf der landwirtschaftlichen Nutzfläche ausgebracht wird. Alternativ kann die Ausbringung derart erfolgen, dass die Flüssigkeit gezielt auf Zwischenbereiche, welche zwischen benachbarten Pflanzenreihen verlaufen, ausgebracht wird. Die Ausbringung von Flüssigkeit entlang von Zwischenbereichen erfolgt vorzugsweise zur Ausbringung von Flüssigdünger.

In einer anderen bevorzugten Ausführungsform der erfindungsgemäßen landwirtschaftlichen Spritzeinrichtung sind die Zusatzausbringeinheiten an einer unterhalb des Spritzgestänges angeordneten und entlang des Spritzgestänges verlaufenden Strebe befestigt. Vorzugsweise sind die Zusatzausbringeinheiten entlang dieser Strebe verschiebbar. Die Strebe kann dabei einteilig oder mehrteilig ausgebildet sein. Vorzugsweise ist die Strebe über eine Mehrzahl von Befestigungselementen mit dem Spritzgestänge verbunden oder stellt einen Bestandteil des Spritzgestänges dar. Die Strebe kann ein Schutzrohr für die Hauptausbringeinheiten sein. Vorzugsweise sind die Zusatzausbringeinheiten manuell entlang der Strebe verschiebbar und/oder jeweils über Feststelleinrichtungen manuell fixierbar. Alternativ oder zusätzlich können die Zusatzausbringeinheiten mittels einem oder mehrerer Aktoren entlang der Strebe verfahrbar und/oder feststellbar sein.

Darüber hinaus ist eine erfindungsgemäße landwirtschaftliche Spritzeinrichtung vorteilhaft, bei welcher das Verteilergehäuse einer oder mehrerer Hauptausbringeinheiten nicht mit einer Zusatzausbringeinheit verbunden ist. Bei äquidistanter Beabstandung der Zusatzausbringeinheiten zueinander und der Hauptausbringeinheiten zueinander ist der Abstand zwischen benachbarten Zusatzausbringeinheiten vorzugsweise größer als der Abstand zwischen benachbarten Hauptausbringeinheiten. In diesem Fall sind nur einige und nicht sämtliche Hauptausbringeinheiten der landwirtschaftlichen Spritzeinrichtung mit einer Zusatzausbringeinheit verbunden. Die Flüssigkeitsauslässe der Verteilergehäuse der Hauptausbringeinheiten, welche nicht mit einer Zusatzausbringeinheit verbunden sind, sind vorzugsweise verschlossen, insbesondere mit einem Blindstopfen, und erfüllen keine weitere Funktion.

In einer Weiterbildung der erfindungsgemäßen landwirtschaftlichen Spritzeinrichtung weist diese eine Steuerungseinrichtung auf, welche dazu eingerichtet ist, den Durchfluss durch den Flüssigkeitseinlass und/oder den Durchfluss durch die einzelnen Flüssigkeitsauslässe der Verteilergehäuse der jeweiligen Hauptausbringeinheiten zu steuern. Beispielsweise können dem Flüssigkeitseinlass und/oder den jeweiligen Flüssigkeitsauslässen Ventileinheiten zugeordnet sein, mittels welchen der Durchfluss steuerbar ist. Durch die Ventileinheiten kann der Durchfluss auch vollständig gesperrt oder freigegeben werden. Dies erlaubt das wahlweise Zuschalten oder Abschalten der Zusatzausbringeinheiten.

Außerdem ist eine erfindungsgemäße landwirtschaftliche Spritzeinrichtung vorteilhaft, bei welcher die Steuerungseinrichtung dazu eingerichtet ist, eine den einzelnen Hauptausbringeinheiten bereitzustellenden Flüssigkeitsmenge für einen geplanten Ausbringvorgang zu ermitteln und die Bereitstellung der ermittelten Flüssigkeitsmenge an den jeweiligen Hauptausbringeinheiten zu veranlassen. Da die Zusatzausbringeinheiten einen größeren Abstand zueinander aufweisen können als die Hauptausbringeinheiten, kann es vorkommen, dass eine oder mehrere Hauptausbringeinheiten nicht mit einer Zusatzausbringeinheit verbunden sind. Diese Verschaltung der Ausbringeinheiten ist bei der Ermittlung der den jeweiligen Hauptausbringeinheiten bereitzustellenden Flüssigkeitsmenge zu berücksichtigen. Ferner ist bei der Ermittlung der den jeweiligen Hauptausbringeinheiten bereitzustellenden Flüssigkeitsmenge zu berücksichtigen, ob die Ausbringung der Flüssigkeit nur über die Zusatzausbringeinheiten, nur über die Hauptausbringeinheiten oder über die Zusatzausbringeinheiten und die Hauptausbringeinheiten erfolgen soll.

In einer weiteren bevorzugten Ausführungsform der erfindungsgemäßen landwirtschaftlichen Spritzeinrichtung ist die Steuerungseinrichtung dazu eingerichtet, beim Ermitteln der den einzelnen Hauptausbringeinheiten bereitzustellenden Flüssigkeitsmenge die Positionen der Zusatzausbringeinheiten zu berücksichtigen. Die Information zu den Positionen der Zusatzausbringeinheiten können manuell von einem Benutzer eingebbar sein, beispielsweise wenn die Zusatzausbringeinheiten manuell positionierbar sind. Die Positionen der Zusatzausbringeinheiten können dabei durch den Benutzer über eine Eingabeeinrichtung der landwirtschaftlichen Spritzeinrichtung eingegeben werden oder der Steuerungseinrichtung über ein mobiles Endgerät mitgeteilt werden. In diesem Fall kann der Benutzer die Information zu den Positionen der Zusatzausbringeinheiten auch manuell über das mobile Endgerät eingeben. Die Positionen der Zusatzausbringeinheiten können auch von einer entsprechenden Erfassungseinrichtung der landwirtschaftlichen Spritzeinrichtung erfasst werden, insbesondere wenn die Zusatzausbringeinheiten über Aktoren der landwirtschaftlichen Spritzeinrichtung bewegbar sind. Die Erfassungseinrichtung kann dabei beispielsweise eine oder mehrere Sensoreinrichtungen umfassen. Alternativ oder zusätzlich können die Positionen der Zusatzausbringeinheiten in diesem Fall auch über die Bewegungshistorie der einzelnen Zusatzausbringeinheiten ermittelt werden. In diesem Fall werden die Verstellwege der jeweiligen Zusatzausbringeinheiten ausgewertet, um die aktuelle Position der jeweiligen Zusatzausbringeinheit zu ermitteln.

Es ist außerdem eine landwirtschaftliche Spritzeinrichtung vorteilhaft, bei welcher die Steuerungseinrichtung dazu eingerichtet ist, beim Ermitteln der den einzelnen Hauptausbringeinheiten bereitzustellenden Flüssigkeitsmenge den Zustand, insbesondere den Schaltungszustand, der jeweiligen Hauptausbringeinheiten zu berücksichtigen. Der Schaltungszustand betrifft die Durchflusseinstellungen am Flüssigkeitseinlass und/oder den Flüssigkeitsauslässen der Verteilergehäuse der jeweiligen Hauptausbringeinheiten. Über den Schaltungszustand kann ermittelt werden, ob eine Speisung der Zusatzausbringeinheiten über die Hauptausbringeinheiten erfolgt. Ferner kann über den Schaltungszustand ermittelt werden, ob alternativ oder zusätzlich zu der Ausbringung der Flüssigkeit durch die Zusatzausbringeinheiten auch eine Flüssigkeitsausbringung über die Hauptausbringeinheiten erfolgt.

In einer anderen bevorzugten Ausführungsform der erfindungsgemäßen landwirtschaftlichen Spritzeinrichtung ist die Steuerungseinrichtung dazu eingerichtet, beim Ermitteln der den einzelnen Hauptausbringeinheiten bereitzustellenden Flüssigkeitsmenge zu berücksichtigen, ob die jeweilige Hauptausbringeinheit mit einer Zusatzausbringeinheit verbunden ist. Vorzugsweise werden entsprechende Verbindungsinformationen von einem Benutzer manuell bereitgestellt oder durch den Hersteller der landwirtschaftlichen Spritzeinrichtung im Rahmen einer Erstkonfiguration auf einem Speicher der Steuerungseinrichtung hinterlegt.

Die der Erfindung zugrundeliegende Aufgabe wird ferner durch ein Verfahren der eingangs genannten Art gelöst, wobei im Rahmen des erfindungsgemäßen Verfahrens Flüssigkeit aus den jeweiligen Verteilergehäusen mehrerer Hauptausbringeinheiten durch einen Flüssigkeitsauslass des jeweiligen Verteilergehäuses zu jeweils einer Zusatzausbringeinheit geleitet wird und die Flüssigkeit durch die Zusatzausbringeinheiten auf die landwirtschaftliche Nutzfläche ausgebracht wird. Die Flüssigkeit wird über flexible Leitungen von den Hauptausbringeinheiten an die Zusatzausbringeinheiten geleitet. Insbesondere sind die Hauptausbringeinheiten als Mehrfachdüsenkörper ausgebildet, wobei die Zusatzausbringeinheiten vorzugsweise als Spritzdüsen ausgebildet sind.

Beim erfindungsgemäßen Verfahren wird eine oder werden mehreren Zusatzausbringeinheiten entlang des Spritzgestänges quer zur Fahrtrichtung bewegt. Das Bewegen der einen oder der mehreren Zusatzausbringeinheiten kann dabei entweder manuell durch einen Benutzer umgesetzt werden oder durch Aktoren der landwirtschaftlichen Spritzeinrichtung. Darüber hinaus umfasst das Verfahren das Fixieren des einen oder der mehreren bewegten Zusatzausbringeinheiten. Das Fixieren kann ebenfalls entweder manuell oder über entsprechende Aktoren der landwirtschaftlichen Spritzeinrichtung erfolgen. Das Fixieren einer Zusatzausbringeinheit erfolgt vorzugsweise formschlüssig und/oder kraftschlüssig. Insbesondere kann die eine oder können die mehreren Zusatzausbringeinheiten an einer quer zur Fahrtrichtung verlaufenden Strebe der landwirtschaftlichen Spritzeinrichtung verklemmt werden.

Es ist außerdem ein erfindungsgemäßes Verfahren bevorzugt, bei welchem der Durchfluss durch den Flüssigkeitseinlass der jeweiligen Verteilergehäuse der Hauptausbringeinheiten gesteuert wird. Beispielsweise kann der Flüssigkeitseinlass der jeweiligen Verteilergehäuse vollständig gesperrt oder freigegeben werden. Die Steuerung des Durchflusses kann auch derart erfolgen, dass die Menge der in die jeweiligen Verteilergehäuse einströmenden Flüssigkeit exakt eingestellt wird. Ferner kann das Verfahren das Steuern des Durchflusses durch die einzelnen Flüssigkeitsauslässe der jeweiligen Verteilergehäuse der Hauptausbringeinheiten umfassen. Die jeweiligen Flüssigkeitsauslässe der Verteilergehäuse der Hauptausbringeinheiten können dabei vollständig freigegeben oder gesperrt werden. Ferner kann auch die Menge an Flüssigkeit, welche aus den Verteilergehäusen durch die jeweiligen Flüssigkeitsauslässe ausströmt, exakt einstellbar sein. Über die Durchflusssteuerung an den Flüssigkeitsauslässen kann die Speisung der Zusatzausbringeinheiten und/oder die Direktausbringung der Flüssigkeit durch die Hauptausbringeinheiten gesteuert werden.

In einer weiteren Ausführungsform des erfindungsgemäßen Verfahrens erfolgt ein Aktivieren einer oder mehrerer Zusatzausbringeinheiten durch Freigeben der mit der einen oder den mehreren zu aktivierenden Zusatzausbringeinheiten verbundenen Flüssigkeitsauslässe. Alternativ oder zusätzlich erfolgt ein Deaktivieren einer oder mehrerer Zusatzausbringeinheiten durch Sperren der mit der einen oder den mehreren zu deaktivierenden Zusatzausbringeinheiten verbundenen Flüssigkeitsauslässe. Darüber hinaus ist ein Verfahren bevorzugt, bei welchem ein Aktivieren einer oder mehrerer Hauptausbringeinheiten durch Freigeben einer oder mehrerer Flüssigkeitsauslässe, an welchen ein Düsenaufsatz befestigt ist, erfolgt. Alternativ oder zusätzlich erfolgt ein

Deaktivieren einer oder mehrerer Hauptausbringeinheiten durch Sperren einer oder mehrerer Flüssigkeitsauslässe, an welchen ein Düsenaufsatz befestigt ist.

Es ist außerdem ein erfindungsgemäßes Verfahren bevorzugt, bei welchem die den einzelnen Hauptausbringeinheiten bereitzustellende Flüssigkeitsmenge für einen geplanten Ausbringvorgang durch eine Steuerungseinrichtung der landwirtschaftlichen Spritzeinrichtung ermittelt wird. Darüber hinaus kann ein Veranlassen der Bereitstellung der ermittelten Flüssigkeitsmenge an den jeweiligen Hauptausbringeinheiten durch eine Steuerungseinrichtung der landwirtschaftlichen Spritzeinrichtung erfolgen. Beim Ermitteln der den einzelnen Hauptausbringeinheiten bereitzustellenden Flüssigkeitsmenge wird vorzugsweise die Verschaltung bzw. die fluidtechnische Kopplung der Hauptausbringeinheiten und der Zusatzausbringeinheiten berücksichtigt.

Außerdem ist ein erfindungsgemäßes Verfahren vorteilhaft, bei welchem die Steuerungseinrichtung beim Ermitteln der den einzelnen Hauptausbringeinheiten bereitzustellenden Flüssigkeitsmenge die Positionen der Zusatzausbringeinheiten, den Zustand, insbesondere den Schaltungszustand, der jeweiligen Hauptausbringeinheiten und/oder den Umstand, ob die jeweilige Hauptausbringeinheit mit einer Zusatzausbringeinheit verbunden ist, berücksichtigt.

In einer weiteren bevorzugten Ausführungsform wird das erfindungsgemäße Verfahren mit einer landwirtschaftlichen Spritzeinrichtung nach einer der vorstehend beschriebenen Ausführungsformen ausgeführt. Hinsichtlich der Vorteile und Modifikationen dieses Verfahrens wird auf die Vorteile und Modifikationen der erfindungsgemäßen landwirtschaftlichen Spritzeinrichtung verwiesen.

Nachfolgend werden bevorzugte Ausführungsformen der Erfindung unter Bezugnahme auf die beiliegenden Zeichnungen näher erläutert und beschrieben. Dabei zeigen:
- Fig.1: einen Abschnitt eines Spritzgestänges einer erfindungsgemäßen landwirtschaftlichen Spritzeinrichtung;
- Fig. 2: Hauptausbringeinheiten und Zusatzausbringeinheiten einer erfindungsgemäßen landwirtschaftlichen Spritzeinrichtung; und
- Fig. 3: Hauptausbringeinheiten und Zusatzausbringeinheiten einer weiteren erfindungsgemäßen landwirtschaftlichen Spritzeinrichtung.

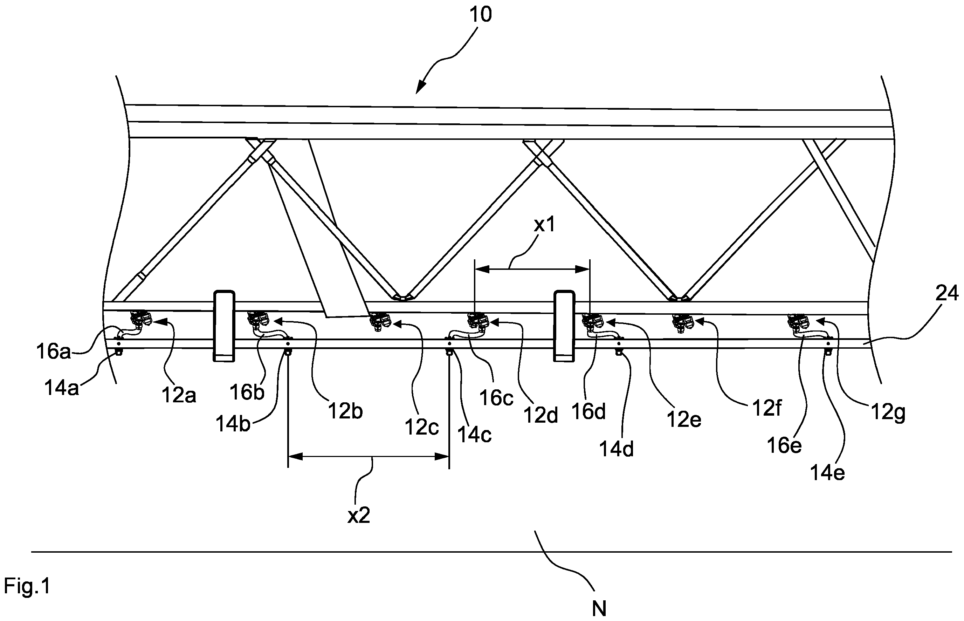

Die Fig. 1 zeigt einen Abschnitt eines Spritzgestänges 10 einer als Feldspritzte ausgebildeten landwirtschaftliche Spritzeinrichtung. An dem Spritzgestänge 10 sind mehrere als Mehrfachdüsenkörper ausgebildete Hauptausbringeinheiten 12a-12g befestigt.

Über die Hauptausbringeinheiten 12a-12g lässt sich Flüssigkeit auf die landwirtschaftliche Nutzfläche N ausbringen. Hierzu weisen die Hauptausbringeinheiten 12a-12g jeweils einen oder mehrere Düsenaufsätze auf. Die Hauptausbringeinheiten 12a-12g sind äquidistant voneinander beabstandet entlang des Spritzgestänges 10 angeordnet, wobei das Spritzgestänge 10 quer zur Fahrtrichtung der landwirtschaftlichen Spritzeinrichtung verläuft. Da die Hauptausbringeinheiten 12a-12g ortsfest an dem Spritzgestänge 10 befestigt sind, ist der Abstand x1 zwischen benachbarten Hausausbringeinheiten 12a-12g fest und nicht veränderlich.

Unterhalb der Hauptausbringeinheiten 12a-12g verläuft eine Strebe 24. Die Strebe 24 ist mehrteilig ausgebildet und fungiert als Schutzrohr für die Hauptausbringeinheiten 12a-12g. An der Strebe 24 sind mehrere als Spritzdüsen ausgebildete Zusatzausbringeinheiten 14a-14e befestigt, sodass die Zusatzausbringeinheiten 14a-14e unterhalb der Hauptausbringeinheiten 12a-12g angeordnet sind. Mittels der Zusatzausbringeinheiten 14a-14e lässt sich ebenfalls Flüssigkeit auf die landwirtschaftliche Nutzfläche N ausbringen.

Die Zusatzausbringeinheiten 14a-14e werden dabei durch die Hauptausbringeinheiten 12a-12g über Zusatzleitungen 16a-16e mit Flüssigkeit gespeist. Somit kann die Flüssigkeitsausbringung nur über die Hauptausbringeinheiten 12a-12g, nur über die Zusatzausbringeinheiten 14a-14e oder gleichzeitig über die Hauptausbringeinheiten 12a-12g und die Zusatzausbringeinheiten 14a-14e erfolgen. Die Zusatzleitungen 16a-16e sind als flexible Leitungen, nämlich als Schläuche ausgebildet.

Die Zusatzausbringeinheiten 14a-14e sind entlang der Strebe 24 und somit quer zur Fahrtrichtung der landwirtschaftlichen Spritzeinrichtung verschiebbar, sodass der Abstand x2 zwischen benachbarten Zusatzausbringeinheiten 14a-14e sowie der Abstand zwischen den Hauptausbringeinheiten 12a-12g und den Zusatzausbringeinheiten 14a-14e veränderbar ist.

In dem dargestellten Zustand sind sowohl die Zusatzausbringeinheiten 14a-14e als auch die Hauptausbringeinheiten 12a-12g untereinander äquidistant beabstandet zueinander angeordnet. Dabei ist der Abstand x2 zwischen benachbarten Zusatzausbringeinheiten 14a-14e größer als der Abstand x1 zwischen benachbarten Hauptausbringeinheiten 12a-12g. Beispielsweise sind benachbarte Zusatzausbringeinheiten 14a-14e 70cm voneinander entfernt, wobei benachbarte Hauptausbringeinheiten 12a-12g 50cm voneinander entfernt sind. Somit sind nur einige und nicht sämtliche Hauptausbringeinheiten 12a-12g der landwirtschaftlichen Spritzeinrichtung mit einer Zusatzausbringeinheit 14a-14e verbunden.

Die Hauptausbringeinheiten 12a-12g sind außerdem mit einer Steuerungseinrichtung verbunden, wobei die Steuerungseinrichtung die den einzelnen Hauptausbringeinheiten 12a-12g bereitzustellende Flüssigkeitsmenge für einen geplanten Ausbringvorgang ermittelt und die Bereitstellung der ermittelten Flüssigkeitsmenge an den jeweiligen Hauptausbringeinheiten 12a-12g veranlasst. Beim Ermitteln der den einzelnen Hauptausbringeinheiten 12a-12g bereitzustellenden Flüssigkeitsmenge berücksichtigt die Steuerungseinrichtung die Positionen der Zusatzausbringeinheiten 14a-14e, den Schaltungszustand der jeweiligen Hauptausbringeinheiten 12a-12g und den Umstand, ob die jeweilige Hauptausbringeinheit 12a-12g mit einer Zusatzausbringeinheit 14a-14e verbunden ist.

Die Informationen zu den Positionen der Zusatzausbringeinheiten 14a-14e werden manuell von einem Benutzer eingegeben, da die Zusatzausbringeinheiten 14a-14e der dargestellten landwirtschaftlichen Spritzeinrichtung manuell positionierbar sind. In anderen Ausführungsformen können die Zusatzausbringeinheiten 14a-14e über Aktoren der landwirtschaftlichen Spritzeinrichtung bewegbar sein, sodass die Positionen der Zusatzausbringeinheiten 14a-14e auch von einer entsprechenden Erfassungseinrichtung der landwirtschaftlichen Spritzeinrichtung erfasst werden können. In diesem Fall ist eine manuelle Bereitstellung von Positionsinformationen nicht notwendig.

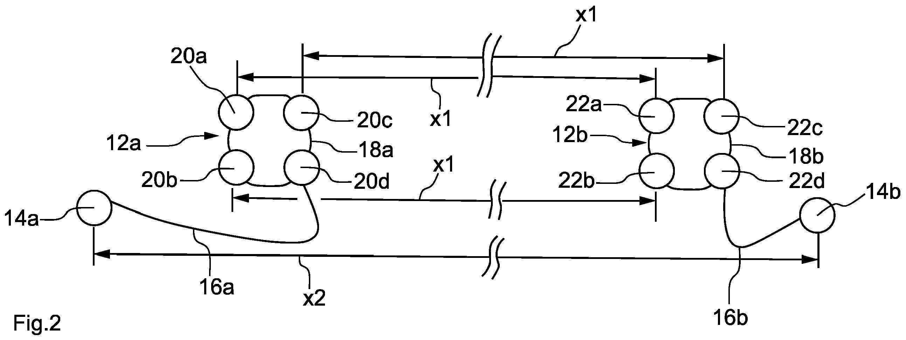

Die Fig. 2 zeigt zwei Hauptausbringeinheiten 12a, 12b, wobei die Hauptausbringeinheiten 12a, 12b jeweils mit einer Zusatzausbringeinheit 14a, 14b verbunden sind.

Die Hauptausbringeinheiten 12a, 12b weisen jeweils ein Verteilergehäuse 18a, 18b auf, wobei die Verteilergehäuse 18a, 18b jeweils einen Flüssigkeitseinlass und vier Flüssigkeitsauslässe 20a-20d, 22a-22d aufweisen. Die Verteilergehäuse 18a, 18b leiten die über den Flüssigkeitseinlass einströmende Flüssigkeit wahlweise an einen Flüssigkeitsauslass 20a-20d, 22a-22d weiter oder teilen die über den Flüssigkeitseinlass einströmende Flüssigkeit auf mehrere Flüssigkeitsauslässe 20a-20d, 22a-22d auf.

Jeweils ein Flüssigkeitsauslass 20d, 22d der Verteilergehäuse 18a, 18b der Hauptausbringeinheiten 12a, 12b ist über eine Zusatzleitung 16a, 16b mit einer Zusatzausbringeinheit 14a, 14b verbunden. Die übrigen Flüssigkeitsauslässe 20a-20c, 22a-22c der Verteilergehäuse 18a, 18b der Hauptausbringeinheiten 12a, 12c weisen Düsenaufsätze auf, sodass die Flüssigkeit direkt durch die Hauptausbringeinheiten 12a, 12b und alternativ oder zusätzlich durch die Zusatzausbringeinheiten 14a, 14b auf die landwirtschaftliche Nutzfläche N ausgebracht werden kann.

Die Hauptausbringeinheiten 12a, 12b sind ortsfest an dem Spritzgestänge 10 befestigt. Die Hauptausbringeinheiten 12a, 12b weisen quer zur Fahrtrichtung, also entlang des Spritzgestänges 10, einen Abstand x1 zueinander auf. Somit weisen auch die Flüssigkeitsauslässe 20a, 22a, die Flüssigkeitsauslässe 20b, 22b und die Flüssigkeitsauslässe 20c, 22c den Abstand x1 zueinander auf. Der Abstand x1 ist wegen der ortfesten Anordnung der Hauptausbringeinheiten 12a, 12b an dem Spritzgestänge 10 nicht veränderbar. Die Zusatzausbringeinheiten 14a, 14b sind verschiebbar an dem Spritzgestänge 10 befestigt. Die Zusatzausbringeinheiten 14a, 14b weisen in dem dargestellten Zustand quer zur Fahrtrichtung, also entlang des Spritzgestänges 10, einen Abstand x2 zueinander auf. Der Abstand x2 ist wegen der Verschiebbarkeit der Zusatzausbringeinheiten 14a, 14b veränderbar. In dem dargestellten Zustand ist der Abstand x2 zwischen den benachbarten Zusatzausbringeinheiten 14a, 14b größer als der Abstand x1 zwischen den benachbarten Hauptausbringeinheiten 12a, 12b.

Mittels einer Steuerungseinrichtung kann der Durchfluss durch den Flüssigkeitseinlass und der Durchfluss durch die einzelnen Flüssigkeitsauslässe 20a-20d, 22a-22d der Verteilergehäuse 18a, 18b gesteuert werden. Zur Durchflusssteuerung sind dem Flüssigkeitseinlass und den jeweiligen Flüssigkeitsauslässen 20a-20d, 22a-22d Ventileinheiten zugeordnet. Mittels der Ventileinheiten ist kann der jeweilige Flüssigkeitsdurchfluss freigegeben, gesperrt oder auf eine definierte Durchflussmenge eingestellt werden. Die Ventileinheiten erlauben somit auch das wahlweise Zuschalten und Abschalten der Zusatzausbringeinheiten 14a, 14b.

Die Zusatzausbringeinheiten 14a, 14b können durch Freigeben der mit den Zusatzausbringeinheiten 14a, 14b verbundenen Flüssigkeitsauslässe 20d, 22d aktiviert werden. Das Deaktivieren der Zusatzausbringeinheiten 14a, 14b erfolgt durch Sperren der mit den Zusatzausbringeinheiten 14a, 14b verbundenen Flüssigkeitsauslässe 20d, 22d. Ferner können die Hauptausbringeinheiten 12a, 12b durch Freigeben eines oder mehrerer Flüssigkeitsauslässe 20a-20c, 22a-22c, an welchen jeweils ein Düsenaufsatz befestigt ist, aktiviert werden. Ein Deaktivieren der Hauptausbringeinheiten 12a, 12b erfolgt durch Sperren sämtlicher Flüssigkeitsauslässe 20a-20c, 22a-22c, an welchen ein Düsenaufsatz befestigt ist.

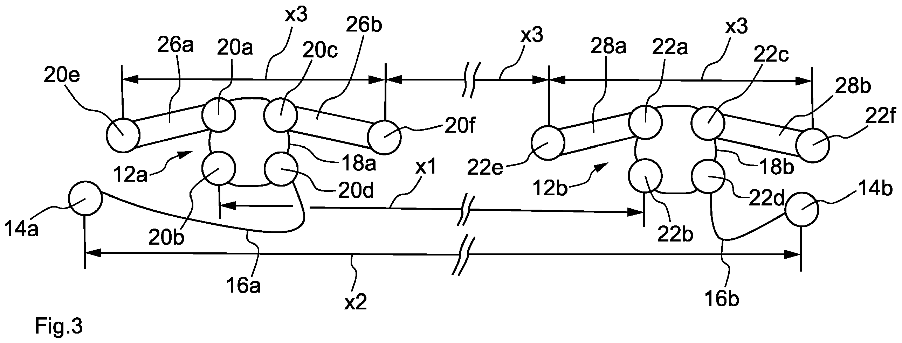

Die Fig. 3 zeigt ebenfalls zwei Hauptausbringeinheiten 12a, 12b, wobei die Hauptausbringeinheiten 12a, 12b jeweils mit einer Zusatzausbringeinheit 14a, 14b verbunden sind.

Die Verteilergehäuse 18a, 18b der Hauptausbringeinheiten 12a, 12b weisen jeweils einen Flüssigkeitseinlass und vier Flüssigkeitsauslässe 20a-20d, 22a-22d auf. Die Flüssigkeitsauslässe 20a, 20c und die Flüssigkeitsauslässe 22a, 22c sind über die gehäuseinternen Leitungen 26a, 26b beziehungsweise über die gehäuseinternen Leitungen 28a, 28b mit den Flüssigkeitsauslässen 20e, 20f und den Flüssigkeitsauslässen 22e, 22f verbunden. Die Flüssigkeitsauslässe 20e, 20f, 22e, 22f weisen einen Abstand x3 zueinander auf, wobei der Abstand x3 kleiner ist als der Abstand x1 zwischen den Flüssigkeitsauslässen 20b, 22b.

Die Verteilergehäuse 18a, 18b leiten die über den Flüssigkeitseinlass einströmende Flüssigkeit wahlweise an einen Flüssigkeitsauslass 20a-20d, 22a-22d weiter oder teilen die über den Flüssigkeitseinlass einströmende Flüssigkeit auf mehrere Flüssigkeitsauslässe 20a-20d, 22a-22d auf. Jeweils ein Flüssigkeitsauslass 20d, 22d der Verteilergehäuse 18a, 18b der Hauptausbringeinheiten 12a, 12b ist über eine Zusatzleitung 16a, 16b mit einer Zusatzausbringeinheit 14a, 14b verbunden. Die Flüssigkeitsauslässe 20b, 22b und die Flüssigkeitsauslässe 20e, 20f, 22e, 22f weisen Düsenaufsätze auf. Somit kann eine Ausbringung der Flüssigkeit auf die landwirtschaftliche Nutzfläche N über die Flüssigkeitsauslässe 20e, 20f, 22e, 22f, die Flüssigkeitsauslässe 20b, 22b und/oder über die Zusatzausbringeinheiten 14a,14b erfolgen.

Die Hauptausbringeinheiten 12a, 12b sind ortsfest an dem Spritzgestänge 10 befestigt, wobei Zusatzausbringeinheiten 14a, 14b verschiebbar an dem Spritzgestänge 10 befestigt sind, sodass der Abstand x2 zwischen den Zusatzausbringeinheiten 14a, 14b veränderbar ist.

Mittels einer Steuerungseinrichtung kann wieder der Durchfluss durch den Flüssigkeitseinlass und der Durchfluss durch die einzelnen Flüssigkeitsauslässe 20a-20f, 22a-22f der Verteilergehäuse 18a, 18b gesteuert werden. Zur Durchflusssteuerung sind dem Flüssigkeitseinlass und den jeweiligen Flüssigkeitsauslässen 20a-20d, 22a-22d Ventileinheiten zugeordnet. Mittels der Ventileinheiten ist kann der jeweilige Flüssigkeitsdurchfluss freigegeben, gesperrt oder auf eine definierte Durchflussmenge eingestellt werden.

### Bezugszeichen

- 10: Spritzgestänge
- 12a-12g: Hauptausbringeinheiten
- 14a-14e: Zusatzausbringeinheiten
- 16a-16e: Zusatzleitungen
- 18a, 18b: Verteilergehäuse
- 20a-20f: Flüssigkeitsauslässe
- 22a-22f: Flüssigkeitsauslässe
- 24: Strebe
- 26a, 26b: Leitungen
- 28a, 28b: Leitungen

- N: Nutzfläche
- x1, x2, x3: Abstände

## Patentansprüche

1. Landwirtschaftliche Spritzeinrichtung, insbesondere Feldspritze, mit
- mehreren an einem Spritzgestänge (10) angeordneten Hauptausbringeinheiten (12a-12g), welche jeweils dazu eingerichtet sind, Flüssigkeit auf eine landwirtschaftliche Nutzfläche (N) auszubringen, und ein Verteilergehäuse (18a, 18b) umfassen, wobei das Verteilergehäuse (18a, 18b) einen Flüssigkeitseinlass und mehrere Flüssigkeitsauslässe (20a-20f, 22a-22f) aufweist und dazu eingerichtet ist, über den Flüssigkeitseinlass einströmende Flüssigkeit wahlweise an einen Flüssigkeitsauslass (20a-20f, 22a-22f) weiterzuleiten oder auf mehrere Flüssigkeitsauslässe (20a-20f, 22a-22f) aufzuteilen; und
- mehreren Zusatzausbringeinheiten (14a-14e), welche jeweils dazu eingerichtet sind, Flüssigkeit auf eine landwirtschaftliche Nutzfläche (N) auszubringen,
wobei jeweils ein Flüssigkeitsauslass (20a-20f, 22a-22f) der Verteilergehäuse (18a, 18b) mehrerer Hauptausbringeinheiten (12a-12g) über eine Zusatzleitung (16a-16e) mit jeweils einer der Zusatzausbringeinheiten (14a-14e) verbunden ist, **dadurch gekennzeichnet, dass** die Zusatzausbringeinheiten (14a-14e) entlang des Spritzgestänges (10) quer zur Fahrtrichtung bewegbar sind und die Zusatzleitungen (16a-16e) als flexible Leitungen ausgebildet sind.

2. Landwirtschaftliche Spritzeinrichtung nach Anspruch 1,
**dadurch gekennzeichnet, dass** die Hauptausbringeinheiten (12a-12g) ortsfest an dem Spritzgestänge (10) befestigt sind.

3. Landwirtschaftliche Spritzeinrichtung nach Anspruch 1 oder 2,
**dadurch gekennzeichnet, dass** die Zusatzausbringeinheiten (14a-14e) an einer unterhalb des Spritzgestänges (10) angeordneten und entlang des Spritzgestänges (10) verlaufenden Strebe (24) befestigt und vorzugsweise entlang dieser Strebe (24) verschiebbar sind.

4. Landwirtschaftliche Spritzeinrichtung nach einem der vorstehenden Ansprüche,
**dadurch gekennzeichnet, dass** das Verteilergehäuse (18a, 18b) einer oder mehrerer Hauptausbringeinheiten (12a-12g) nicht mit einer Zusatzausbringeinheit (14a-14e) verbunden ist.

5. Landwirtschaftliche Spritzeinrichtung nach einem der vorstehenden Ansprüche, **gekennzeichnet durch** eine Steuerungseinrichtung, welche dazu eingerichtet ist, den Durchfluss durch den Flüssigkeitseinlass und/oder den Durchfluss durch die einzelnen Flüssigkeitsauslässe (20a-20f, 22a-22f) der Verteilergehäuse (18a, 18b) der jeweiligen Hauptausbringeinheiten (12a-12g) zu steuern.

6. Landwirtschaftliche Spritzeinrichtung nach Anspruch 5,
**dadurch gekennzeichnet, dass** die Steuerungseinrichtung dazu eingerichtet ist, eine den einzelnen Hauptausbringeinheiten (12a-12g) bereitzustellende Flüssigkeitsmenge für einen geplanten Ausbringvorgang zu ermitteln und die Bereitstellung der ermittelten Flüssigkeitsmenge an den jeweiligen Hauptausbringeinheiten (12a-12g) zu veranlassen.

7. Landwirtschaftliche Spritzeinrichtung nach Anspruch 6,
**dadurch gekennzeichnet, dass** die Steuerungseinrichtung dazu eingerichtet ist, beim Ermitteln der den einzelnen Hauptausbringeinheiten (12a-12g) bereitzustellenden Flüssigkeitsmenge die Positionen der Zusatzausbringeinheiten (14a-14e) zu berücksichtigen.

8. Landwirtschaftliche Spritzeinrichtung nach Anspruch 6 oder 7,
**dadurch gekennzeichnet, dass** die Steuerungseinrichtung dazu eingerichtet ist, beim Ermitteln der den einzelnen Hauptausbringeinheiten (12a-12g) bereitzustellenden Flüssigkeitsmenge den Zustand, insbesondere den Schaltungszustand, der jeweiligen Hauptausbringeinheiten (12a-12g) zu berücksichtigen.

9. Landwirtschaftliche Spritzeinrichtung nach einem der Ansprüche 6 bis 8,
**dadurch gekennzeichnet, dass** die Steuerungseinrichtung dazu eingerichtet ist, beim Ermitteln der den einzelnen Hauptausbringeinheiten (12a-12g) bereitzustellenden Flüssigkeitsmenge zu berücksichtigen, ob die jeweilige Hauptausbringeinheit (12a-12g) mit einer Zusatzausbringeinheit (14a-14e) verbunden ist.

10. Verfahren zum Ausbringen von Flüssigkeit auf eine landwirtschaftliche Nutzfläche (N) mittels einer landwirtschaftlichen Spritzeinrichtung, insbesondere einer landwirtschaftlichen Spritzeinrichtung nach einem der vorstehenden Ansprüche, mit den Schritten:
- Einleiten von Flüssigkeit in Verteilergehäuse (18a, 18b) von mehreren an einem Spritzgestänge (10) angeordneten Hauptausbringeinheiten (12a-12g), wobei die Hauptausbringeinheiten (12a-12g) dazu eingerichtet sind, Flüssigkeit auf die landwirtschaftliche Nutzfläche (N) auszubringen und wobei die Verteilergehäuse (18a, 18b) jeweils einen Flüssigkeitseinlass und mehrere Flüssigkeitsauslässe (20a-20f, 22a-22f) aufweisen und dazu eingerichtet sind, über den Flüssigkeitseinlass einströmende Flüssigkeit wahlweise an einen Flüssigkeitsauslass (20a-20f, 22a-22f) weiterzuleiten oder auf mehrere Flüssigkeitsauslässe (20a-20f, 22a-22f) aufzuteilen;
- Leiten von Flüssigkeit aus den jeweiligen Verteilergehäusen (18a, 18b) mehrerer Hauptausbringeinheiten (12a-12g) durch einen Flüssigkeitsauslass (20a-20f, 22a-22f) des jeweiligen Verteilergehäuses (18a, 18b) zu jeweils einer Zusatzausbringeinheit; und
- Ausbringen der Flüssigkeit auf die landwirtschaftliche Nutzfläche (N) durch die Zusatzausbringeinheiten (14a-14e),
**gekennzeichnet durch** folgende Schritte:
- Bewegen einer oder mehrerer der Zusatzausbringeinheiten (14a-14e) entlang des Spritzgestänges (10) quer zur Fahrtrichtung, und
- Fixieren der einen oder der mehreren bewegten Zusatzausbringeinheiten (14a-14e).

11. Verfahren nach Anspruch 10,
**gekennzeichnet durch** zumindest einen der folgenden Schritte:
- Steuern des Durchflusses durch den Flüssigkeitseinlass der jeweiligen Verteilergehäuse (18a, 18b) der Hauptausbringeinheiten (12a-12g),
- Steuern des Durchflusses durch die einzelnen Flüssigkeitsauslässe (20a-20f, 22a-22f) der jeweiligen Verteilergehäuse (18a, 18b) der Hauptausbringeinheiten (12a-12g).

12. Verfahren nach einem der Ansprüche 10 oder 11,
**gekennzeichnet durch** zumindest einen der folgenden Schritte:
- Aktivieren einer oder mehrerer Zusatzausbringeinheiten (14a-14e) durch Freigeben der mit der einen oder den mehreren zu aktivierenden Zusatzausbringeinheiten (14a-14e) verbundenen Flüssigkeitsauslässe (20a-20f, 22a-22f),
- Deaktivieren einer oder mehrerer Zusatzausbringeinheiten (14a-14e) durch Sperren der mit der einen oder den mehreren zu deaktivierenden Zusatzausbringeinheiten (14a-14e) verbundenen Flüssigkeitsauslässe (20a-20f, 22a-22f);
- Aktivieren einer oder mehrerer Hauptausbringeinheiten (12a-12g) durch Freigeben einer oder mehrerer Flüssigkeitsauslässe (20a-20f, 22a-22f), an welchen ein Düsenaufsatz befestigt ist,
- Deaktivieren einer oder mehrerer Hauptausbringeinheiten (12a-12g) durch Sperren einer oder mehrerer Flüssigkeitsauslässe (20a-20f, 22a-22f), an welchen ein Düsenaufsatz befestigt ist.

13. Verfahren nach einem der Ansprüche 10 bis 12,
**gekennzeichnet durch** zumindest einen der folgenden Schritte:
- Ermitteln der den einzelnen Hauptausbringeinheiten (12a-12g) bereitzustellenden Flüssigkeitsmenge für einen geplanten Ausbringvorgang durch eine Steuerungseinrichtung der landwirtschaftlichen Spritzeinrichtung;
- Veranlassen der Bereitstellung der ermittelten Flüssigkeitsmenge an den jeweiligen Hauptausbringeinheiten (12a-12g) durch eine Steuerungseinrichtung der landwirtschaftlichen Spritzeinrichtung.

14. Verfahren nach Anspruch 13,
**dadurch gekennzeichnet, dass** die Steuerungseinrichtung beim Ermitteln der den einzelnen Hauptausbringeinheiten (12a-12g) bereitzustellenden Flüssigkeitsmenge die Positionen der Zusatzausbringeinheiten (14a-14e), den Zustand, insbesondere den Schaltungszustand, der jeweiligen Hauptausbringeinheiten (12a-12g) und/oder den Umstand, ob die jeweilige Hauptausbringeinheit (12a-12g) mit einer Zusatzausbringeinheit (14a-14e) verbunden ist, berücksichtigt.

## Claims

1. Agricultural spraying equipment, in particular field sprayer, comprising
- a plurality of primary discharging units (12a-12g) which are arranged on a spray boom (10), are respectively configured to dispense liquid onto an agriculturally usable area (N) and comprise a distributor housing (18a, 18b), wherein the distributor housing (18a, 18b) has a liquid inlet and a plurality of liquid outlets (20a-20f, 22a-22f) and is configured to selectively convey liquid flowing in via the liquid inlet to a liquid outlet (20a-20f, 22a-22f), or to divide it among a plurality of liquid outlets (20a-20f, 22a-22f); and
- a plurality of auxiliary discharging units (14a-14e) which are respectively configured to dispense liquid onto an agriculturally usable area (N),
wherein a respective liquid outlet (20a-20f, 22a-22f) of the distributor housings (18a, 18b) of a plurality of primary discharging units (12a-12g) is connected via an auxiliary line (16a-16e) to a respective one of the auxiliary discharging units (14a-14e), **characterized in that** the auxiliary discharging units (14a-14e) are movable along the spray boom (10) transversely to the direction of travel and the auxiliary lines (16a-16e) are designed as flexible lines.

2. Agricultural spraying equipment according to Claim 1,
**characterized in that** the primary discharging units (12a-12g) are fixed to the spray boom (10) in a stationary manner.

3. Agricultural spraying equipment according to Claim 1 or 2,
**characterized in that** the auxiliary discharging units (14a-14e) are fastened to a strut (24) arranged below the spray boom (10) and running along said spray boom (10) and are preferably displaceable along this strut (24).

4. Agricultural spraying equipment according to one of the preceding claims,
**characterized in that** the distributor housing (18a, 18b) of one or more primary discharging units (12a-12g) is not connected to an auxiliary discharging unit (14a-14e).

5. Agricultural spraying equipment according to one of the preceding claims,
**characterized by** a control device which is configured to control the flow through the liquid inlet and/or the flow through the individual liquid outlets (20a-20f, 22a-22f) of the distributor housings (18a, 18b) of the respective primary discharging units (12a-12g).

6. Agricultural spraying equipment according to Claim 5,
**characterized in that** the control device is configured to determine an amount of liquid to be provided to the individual primary discharging units (12a-12g) for a planned application process, and to induce the provisioning of the determined amount of liquid to the respective primary discharging units (12a-12g).

7. Agricultural spraying equipment according to Claim 6,
**characterized in that** the control device is configured to take into account the positions of the auxiliary discharging units (14a-14e) when determining the amount of liquid to be provided to the individual primary discharging units (12a-12g).

8. Agricultural spraying equipment according to Claim 6 or 7,
**characterized in that** the control device is configured to take into account the state, in particular the switching state, of the respective primary discharging units (12a-12g) when determining the amount of liquid to be provided to the individual primary discharging units (12a-12g).

9. Agricultural spraying equipment according to one of Claims 6 to 8,
**characterized in that** the control device is configured to take into account, when determining the amount of liquid to be provided to the individual primary discharging units (12a-12g), whether the respective primary discharging unit (12a-12g) is connected to an auxiliary discharging unit (14a-14e).

10. Method for dispensing liquid onto an agriculturally usable area (N) by means of an agricultural spraying equipment, in particular an agricultural spraying equipment according to one of the preceding claims, comprising the steps of:
- introducing liquid into distributor housings (18a, 18b) of a plurality of primary discharging units (12a-12g) arranged on a spray boom (10), wherein the primary discharging units (12a-12g) are configured to dispense liquid onto the agriculturally usable area (N), and wherein the distributor housings (18a, 18b) have a respective liquid inlet and a plurality of liquid outlets (20a-20f, 22a-22f) and are configured to selectively convey liquid flowing in via the liquid inlet to a liquid outlet (20a-20f, 22a-22f), or to divide it among a plurality of liquid outlets (20a-20f, 22a-22f);
- directing liquid from the respective distributor housings (18a, 18b) of a plurality of primary discharging units (12a-12g) through a liquid outlet (20a-20f, 22a-22f) of the respective distributor housing (18a, 18b) to a respective auxiliary discharging unit; and
- dispensing the liquid onto the agriculturally usable area (N) via the auxiliary discharging units (14a-14e),
**characterized by** the following steps:
- moving one or more of the auxiliary discharging units (14a-14e) along the spray boom (10) transversely to the direction of travel, and
- fixing the one or more moved auxiliary discharging units (14a-14e).

11. Method according to Claim 10,
**characterized by** at least one of the following steps:
- controlling the flow through the liquid inlet of the respective distributor housing (18a, 18b) of the primary discharging units (12a-12g),
- controlling the flow through the individual liquid outlets (20a-20f, 22a-22f) of the respective distributor housing (18a, 18b) of the primary discharging units (12a-12g).

12. Method according to one of Claims 10 or 11,
**characterized by** at least one of the following steps:
- activating one or more auxiliary discharging units (14a-14e) by unblocking the liquid outlets (20a-20f, 22a-22f) connected to the one or more auxiliary discharging units (14a-14e) to be activated,
- deactivating one or more auxiliary discharging units (14a-14e) by blocking the liquid outlets (20a-20f, 22a-22f) connected to the one or more auxiliary discharging units (14a-14e) to be deactivated;
- activating one or more primary discharging units (12a-12g) by unblocking one or more liquid outlets (20a-20f, 22a-22f) to which a nozzle attachment is fastened,
- deactivating one or more primary discharging units (12a-12g) by blocking one or more liquid outlets (20a-20f, 22a-22f) to which a nozzle attachment is fastened.

13. Method according to one of Claims 10 to 12,
**characterized by** at least one of the following steps:
- determining the amount of liquid to be provided to the individual primary discharging units (12a-12g) for a planned application process, via a control device of the agricultural spraying equipment;
- inducing the provisioning of the determined amount of liquid to the respective primary discharging units (12a-12g) via a control device of the agricultural spraying equipment.

14. Method according to Claim 13,
**characterized in that** the control device, when determining the amount of liquid to be provided to the individual primary discharging units (12a-12g), takes into account the positions of the auxiliary discharging units (14a-14e); the state, in particular the switching state, of the respective primary discharging units (12a-12g); and/or the circumstance of whether the respective primary discharging unit (12a-12g) is connected to an auxiliary discharging unit (14a-14e).

## Revendications

1. Dispositif de pulvérisation agricole, en particulier pulvérisateur agricole, comprenant
- plusieurs unités d'épandage principales (12a-12g) disposées sur une rampe de pulvérisation (10), lesquelles sont conçues respectivement pour épandre du liquide sur une surface agricole utile (N) et comprennent un boîtier de répartition (18a, 18b), le boîtier de répartition (18a, 18b) présentant une entrée de liquide et plusieurs sorties de liquide (20a-20f, 22a-22f) et étant conçu pour, au choix, guider le liquide entrant par l'entrée de liquide vers une sortie de liquide (20a-20f, 22a-22f) ou le distribuer sur plusieurs sorties de liquide (20a-20f, 22a-22f) ; et
- plusieurs unités d'épandage supplémentaires (14a-14e), lesquelles sont conçues respectivement pour épandre du liquide sur une surface agricole utile (N),
une sortie de liquide (20a-20f, 22a-22f) respective du boîtier de répartition (18a, 18b) de plusieurs unités d'épandage principales (12a-12g) étant connectée par le biais d'une conduite supplémentaire (16a-16e) respectivement à une des unités d'épandage supplémentaires (14a-14e), **caractérisé en ce que** les unités d'épandage supplémentaires (14a-14e) sont mobiles le long de la rampe de pulvérisation (10) perpendiculairement au sens de la marche et les conduites supplémentaires (16a-16e) sont réalisées comme des conduites flexibles.

2. Dispositif de pulvérisation agricole selon la revendication 1,
**caractérisé en ce que** les unités d'épandage principales (12a-12g) sont installées de manière fixe sur la rampe de pulvérisation (10).

3. Dispositif de pulvérisation agricole selon la revendication 1 ou 2,
**caractérisé en ce que** les unités d'épandage supplémentaires (14a-14e) sont fixées sur une traverse (24) disposée en dessous de la rampe de pulvérisation (10) et s'étendant le long de la rampe de pulvérisation (10) et sont de préférence déplaçables le long de cette traverse (24).

4. Dispositif de pulvérisation agricole selon l'une quelconque des revendications précédentes,
**caractérisé en ce que** le boîtier de répartition (18a, 18b) d'une ou plusieurs unités d'épandage principales (12a-12g) n'est pas connecté à une unité d'épandage supplémentaire (14a-14e).

5. Dispositif de pulvérisation agricole selon l'une quelconque des revendications précédentes,
**caractérisé par** un dispositif de commande, lequel est conçu pour commander le débit à travers l'entrée de liquide et/ou le débit à travers les sorties de liquide (20a-20f, 22a-22f) des boîtiers de répartition (18a, 18b) des unités d'épandage principales (12a-12g) respectives.

6. Dispositif de pulvérisation agricole selon la revendication 5,
**caractérisé en ce que** le dispositif de commande est conçu pour déterminer une quantité de liquide à fournir aux unités d'épandage principales (12a-12g) individuelles pour une opération d'épandage planifiée et pour susciter la fourniture de la quantité de liquide déterminée aux unités d'épandage principales (12a-12g) respectives.

7. Dispositif de pulvérisation agricole selon la revendication 6,
**caractérisé en ce que** le dispositif de commande est conçu pour tenir compte, lors de la détermination de la quantité de liquide à fournir aux unités d'épandage principales (12a-12g) individuelles, de la position des unités d'épandage supplémentaires (14a-14e).

8. Dispositif de commande selon la revendication 6 ou 7,
**caractérisé en ce que** le dispositif de commande est conçu pour tenir compte, lors de la détermination de la quantité de liquide à fournir aux unités d'épandage principales (12a-12g) individuelles, de l'état, en particulier de l'état de commutation, des unités d'épandage principales (12a-12g) respectives.

9. Dispositif de pulvérisation agricole selon l'une quelconque des revendications 6 à 8,
**caractérisé en ce que** le dispositif de commande est conçu pour tenir compte, lors de la détermination de la quantité de liquide à fournir aux unités d'épandage principales (12a-12g) individuelles, de la connexion éventuelle de l'unité d'épandage principale (12a-12g) respective avec une unité d'épandage supplémentaire (14a-14e).

10. Procédé pour l'épandage de liquide sur une surface agricole utile (N) au moyen d'un dispositif de pulvérisation agricole, en particulier d'un dispositif de pulvérisation agricole selon l'une quelconque des revendications précédentes, comprenant les étapes :
- d'introduction d'un liquide dans les boîtiers de répartition (18, 18b) de plusieurs unités d'épandage principales (12a-12g) disposées sur une rampe de pulvérisation (10), les unités d'épandage principales (12a-12g) étant conçues pour épandre du liquide sur une surface agricole utile (N) et les boîtiers de répartition (18a, 18b) présentant respectivement une entrée de liquide et plusieurs sorties de liquide (20a-20f, 22a-22f) et étant conçus pour, au choix, guider le liquide entrant par l'entrée de liquide vers une sortie de liquide (20a-20f, 22a-22f) ou le distribuer sur plusieurs sorties de liquide (20a-20f, 22a-22f) ;
- de guidage du liquide des plusieurs unités d'épandage principales (12a-12g) des boîtiers de répartition (18a, 18b) respectifs à travers une sortie de liquide (20a-20f, 22a-22f) du boîtier de répartition (18a, 18b) respectif respectivement vers une unité d'épandage supplémentaire ; et
- d'épandage du liquide sur la surface agricole utile (N) à travers les unités d'épandage supplémentaires (14a-14e),
**caractérisé par** les étapes suivantes :
- déplacement d'une ou plusieurs unités d'épandage supplémentaires (14a-14e) le long de la rampe de pulvérisation (10) perpendiculairement au sens de la marche, et
- fixation de l'une ou plusieurs unités d'épandage supplémentaires (14a-14e) déplacées.

11. Procédé selon la revendication 10,
**caractérisé par** au moins une des étapes suivantes :
- commande du débit à travers l'entrée de liquide des boîtiers de répartition (18a, 18b) respectifs des unités d'épandage principales (12a-12g),
- commande du débit à travers les sorties de liquide (20a-20f, 22a-22f) individuelles des boîtiers de répartition (18a, 18b) respectifs des unités d'épandage principales (12a-12g).

12. Procédé selon l'une quelconque des revendications 10 ou 11, **caractérisé par** au moins une des étapes suivantes :
- activation d'une ou plusieurs unités d'épandage supplémentaires (14a-14e) en libérant les sorties de liquide (20a-20f, 22a-22f) connectées à l'une ou plusieurs unités d'épandage supplémentaires (14a-14e) à activer,
- désactivation d'une ou plusieurs unités d'épandage supplémentaires (14a-14e) en bloquant les sorties de liquide (20a-20f, 22a-22f) connectées à l'une ou plusieurs unités d'épandage supplémentaires (14a-14e) à désactiver ;
- activation d'une ou plusieurs unités d'épandage principales (12a-12g) en libérant une ou plusieurs sorties de liquide (20a-20f, 22a-22f) sur lesquelles un embout de buse est fixé,
- désactivation d'une ou plusieurs unités d'épandage principales (12a-12g) en bloquant une ou plusieurs sorties de liquide (20a-20f, 22a-22f) sur lesquelles un embout de buse est fixé.

13. Procédé selon l'une quelconque des revendications 10 à 12,
**caractérisé par** au moins une des étapes suivantes :
- détermination par un dispositif de commande du dispositif de pulvérisation agricole de la quantité de liquide à fournir aux unités d'épandage principales (12a-12g) individuelles pour une opération d'épandage planifiée ;
- suscitation par un dispositif de commande du dispositif de pulvérisation agricole de la fourniture de la quantité de liquide déterminée aux unités d'épandage principales (12a-12g) individuelles.

14. Procédé selon la revendication 13,
**caractérisé en ce que** le dispositif de commande tient compte, lors de la détermination de la quantité de liquide à fournir aux unités d'épandage principales (12a-12g) individuelles, de la position des unités d'épandage supplémentaires (14a-14e), de l'état, en particulier de l'état de commutation, des unités d'épandage principales (12a-12g) respectives et/ou de la connexion éventuelle de l'unité d'épandage principale (12a-12g) respective avec une unité d'épandage supplémentaire (14a-14e).
